# EUROPEAN PATENT SPECIFICATION

(11) **EP 4 754 227 B1**
(45) Date of publication and mention of the grant of the patent: **25.11.2026**
(21) Application number: 24771968.5
(22) Date of filing: 17.09.2024
(51) Int. Cl.: C12C 3/12, C12C 5/02, C12C 12/04

(54) **METHOD OF DISPENSING NON-ALCOHOLIC DRAUGHT BEER FROM A BEER CONTAINER**
VERFAHREN ZUR ABGABE VON NICHTALKOHOLISCHEM FASSBIER AUS EINEM BIERBEHÄLTER
PROCÉDÉ DE DISTRIBUTION DE BIÈRE PRESSION NON ALCOOLIQUE À PARTIR D'UN RÉCIPIENT DE BIÈRE

(30) Priority: 18.09.2023 EP 23197982; 08.04.2024 EP 24168998; 05.08.2024 EP 24192940
(43) Date of publication of application: 10.06.2026
(73) Proprietor: Heineken Supply Chain B.V., 2382 PH Zoeterwoude (NL)
(72) Inventor: VAN DER AA, Michiel Adrianus Henricus, 2382 PH Zoeterwoude (NL); O'SULLIVAN, Tadhg, 2382 PH Zoeterwoude (NL); ZEEGERS, Petronella Joanna, 2382 PH Zoeterwoude (NL)
(74) Representative: Nederlandsch Octrooibureau
(86) International application number: PCT/EP2024/075978
(87) International publication number: WO 2025/061705

(56) References cited:
- WO-A1-2012/167920
- WO-A1-2023/126540
- TIPPMANN DR. JOHANNES: "GradPlato - Alkoholfreies Bier vom Hahn", 27 August 2021 (2021-08-27), pages 1 - 5, XP093227137, Retrieved from the Internet <URL:https://gradplato.com/kategorien/know-how/alkoholfreies-bier-vom-hahn-moeglichkeiten-und-grenzen> [retrieved on 20241122]
- ANONYMOUS: "Nagardo | Natural preservative for drinks | LANXESS", 25 July 2023 (2023-07-25), pages 1 - 11, XP093126644, Retrieved from the Internet <URL:https://web.archive.org/web/20230725164726/https://lanxess.com/en/Products-and-Brands/Brands/Nagardo> [retrieved on 20240202]

## Description

### Technical field of the Invention

The present invention relates to a method of dispensing non-alcoholic draught beer from a beer container comprising 4-10,000 L of the beer during a dispensing period until the container is empty, wherein the dispensing period exceeds 12 hours and wherein the beer container is kept at ambient temperature during the dispensing period, said non-alcoholic draught beer comprising:
- 5-100 g/L of fermentable sugars selected from glucose, maltose, fructose, sucrose and combinations thereof;
- 2-50 mg/L of one or more glycolipids; and
- 0.1-50 mg/L of one or more reduced iso-alpha acids selected from dihydro-iso-alpha acids, tetrahydro-iso-alpha acids and hexahydro-iso-alpha acids.

### Background of the Invention

Beer is a universally popular beverage, consumed worldwide. In recent years, the beer market has witnessed a significant increase in the consumption of alcohol-free beer. This increase is triggered by concerns about health and safety, and is expedited by innovations that have substantially improved the quality of alcohol-free beers.

Alcohol-free beers are produced by two basic processes. One applies classical brewing processes followed by alcohol removal by techniques such as reverse osmosis, dialysis or evaporation. The other approach aims at reducing the formation of alcohol during fermentation by contacting boiled wort with yeast under conditions that minimise fermentative production of alcohol. This type of process is commonly referred to as "restricted alcohol fermentation".

Cold contact fermentation (or cold contact process) is a form of restricted alcohol fermentation that employs a combination of low fermentation temperatures and extended fermentation contact times. Alcohol-free beers that have been produced using cold contact fermentation typically contain high levels of fermentable sugars.

The presence of fermentable sugars in non-alcoholic draught beer poses a potential risk in that, during the period in which the draught beer is dispensed from the container holding the draught beer, the draught beer present in the beer tap and the tubes that connect the beer tap to the container, may become contaminated with yeast. Especially if it takes one or more days to empty the beer container and if the container is kept at ambient temperature, there is a risk that such yeast contamination will lead to the fermentative production of alcohol. The resulting increase in alcohol content is obviously unwanted in non-alcoholic beers.

GB-A 113 611 describes a process of making a substantially non-alcoholic beverage from a fermented malt liquor containing alcohol which comprises eliminating substantially all the alcohol from said liquor, and adding to the residue suitable quantities of salt, sweetening material and hops.

US 2019/380361 describes a packed non-alcoholic beer-taste beverage comprising a preservative, a sweet substance and a bitter substance.

US 2011/0287152 describes a method for improving foam stability of a malt-based beverage which comprises adding a solution of alpha acids.

WO 2012/167920A1 describes long chain glycolipids obtained from fungal strains belonging to the *Dacrymycetaceae* family. These glycolipids can be used as an agent with preservative or antimicrobial properties.

"Nagardo^{®} Natural Guardian, The natural preservative for drinks", was available on the internet on 2 February 2024. In the document, Nagardo^{®} is presented as a natural preservative for beverages. It is further mentioned that Nagardo^{®} is obtained as a purified mixture of naturally occurring glycolipids.

In a publication by the American Brewers Association titled "Non-alcohol Beer: A Review and Key Considerations" (10 August 2022), it is observed that while non-alcohol beer can be rendered microbiologically stable for service in bottles and cans, draught beer presents a problematic form of service. Even if a keg of beer is sterile on delivery, the act of connecting the keg to a coupler for bar service can expose the beer to contaminant organisms already present in the draught system. The authors conclude that until substantial further study is conducted regarding the safety of low/non-alcohol beer served on draught, packaging and service of these styles should be restricted to small-pack forms.

An internet publication by Tippmann (KNOW-HOW | Alcoholfreies Bier vom Hahn, https:// www.facebook.com/GradPlato-1899749333402669/) discusses known issues with dispensing alcohol-free beer from the tap, particularly focusing on microbial spoilage. The publication mentions a study that examined the impact of keg cooling and hygiene on the microbiological quality of non-alcoholic draught beer dispensed over a period of one week. The study demonstrated that well-maintained, chilled draft systems showed minimal microbial growth, while warm, poorly maintained systems experienced significant microbial contamination over time.

### Summary of the Invention

The inventors have discovered that the occurrence of unwanted yeast fermentation in non-alcoholic draught beer can be prevented very effectively without any adverse effect on the quality of the draught beer by incorporating in the beer a combination of a particular glycolipid and reduced iso-alpha acids.

Accordingly, the invention relates to a method of dispensing non-alcoholic draught beer from a beer container comprising 4-10,000 L of the beer during a dispensing period until the container is empty, wherein the dispensing period exceeds 12 hours and wherein the beer container is kept at ambient temperature during the dispensing period, said non-alcoholic draught beer comprising:
- 5-150 g/L of fermentable sugars selected from glucose, maltose, fructose, sucrose and combinations thereof;
- 2-50 mg/L of one or more glycolipids selected from:
   - glycolipid acids according to formula I, 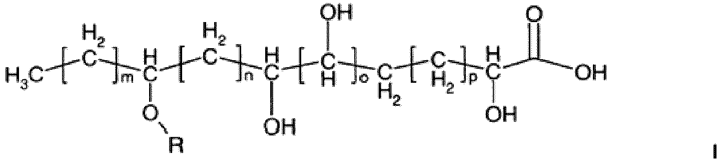 wherein:
      - $3 \leq m \leq 5 ,$
      - $2 \leq n \leq 5 ,$
      - o = 0 or o = 1,
      - $3 \leq p \leq 17 ,$
      - $m + n + o + p \geq 14 ;$
      - R is a carbohydrate moiety bound via one of its carbon atoms to the binding oxygen, ,
   - lactones obtained by intramolecular esterification of glycolipid acids according to formula I,
   - physiologically acceptable salts of the glycolipid acids according to formula I;
   - esters of the glycolipid acids according to formula I; and
- 0.1-50 mg/L of one or more reduced iso-alpha acids selected from dihydro-iso-alpha acids, tetrahydro-iso-alpha acids and hexahydro-iso alpha acids.

### Detailed Description of the Invention

The invention provides a method of dispensing non-alcoholic draught beer from a beer container comprising 4-10,000 L of the beer during a dispensing period until the container is empty, wherein the dispensing period exceeds 12 hours and wherein the beer container is kept at ambient temperature during the dispensing period, said beer comprising:
- 5-150 g/L of fermentable sugars selected from glucose, maltose, fructose, sucrose and combinations thereof;
- 2-50 mg/L of one or more glycolipids selected from:
   - glycolipid acids according to formula I, 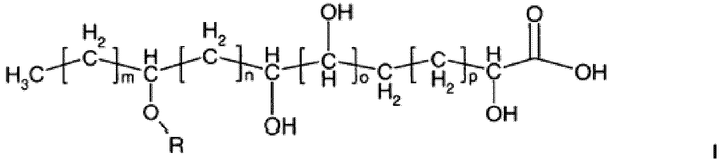 wherein:
      - $3 \leq m \leq 5 ,$
      - $2 \leq n \leq 5 ,$
      - o = 0 or o = 1, $3 \leq p \leq 17 ,$
      - $m + n + o + p \geq 14 ;$
      - R is a carbohydrate moiety bound via one of its carbon atoms to the binding oxygen,
   - lactones obtained by intramolecular esterification of glycolipid acids according to formula I,
   - physiologically acceptable salts of the glycolipid acids according to formula I;
   - esters of the glycolipid acids according to formula I; and
- 0.1-50 mg/L of one or more reduced iso-alpha acids selected from dihydro-iso-alpha acids, tetrahydro-iso-alpha acids and hexahydro-iso-alpha acids.

The term "iso-alpha acids" as used herein refers to substances selected from the group of isohumulone, isoadhumulone, isocohumulone, pre-isohumulone, post-isohumulone and combinations thereof. The term "iso-alpha acids" encompasses different stereo-isomers (cis-iso-alpha acids and trans-iso-alpha acids).

The term "reduced iso-alpha acids" refers to iso-alpha acids in which one or more double bonds have been hydrogenated. Dihydro-iso-alpha acids (also called rho-iso alpha acids) are obtained by hydrogenation of the carbonyl group in the iso-3 hexenoyl chain to a hydroxyl group. Tetrahydro-iso-alpha acids are obtained by hydrogenation of the C=C bonds in the aforementioned iso-3-hexenoyl side chain and the isopentenyl side chain. Hexahydro-iso-alpha acids are obtained by hydrogenation of the carbonyl group in the iso-3 hexenoyl chain to a hydroxyl group and hydrogenation of the C=C bonds in the iso-3- hexenoyl side chain and the isopentenyl side chain.

The term "beer" as used herein refers to a yeast fermented malt beverage. Beer is commonly produced by a process that comprises the following basic steps:
- mashing a mash mixture comprising malted grains, preferably malted barley, optionally supplementary grains and water to produce a mash;
- separating the mash in wort and spent grains;
- boiling the wort to produce a boiled wort;
- fermenting the boiled wort with live yeast to produce a fermented wort;
- subjecting the fermented wort to one or more further process steps (e.g. maturation and filtration) to produce beer; and
- packaging the beer in a sealed container.

The term "non-alcoholic beer" as used herein, unless indicated otherwise, refers to a beer having an ethanol content of less than 1.0% ABV.

The term "anionic polysaccharide" as used herein refers to a polysaccharide that has a negative charge when dissolved in water of neutral pH (pH 7). Anionic polysaccharides typically comprise carboxylate and/or sulphate groups.

The term "or" as used herein should be construed as "and/or", unless specified otherwise.

The term "a" or "an" as used herein is defined as "at least one" unless specified otherwise.

Numerical ranges expressed in the format "from x to y" are understood to include x and y.

Whenever components A and B are said to be present in a weight ratio of x:y, what is meant is that the concentration of component A in wt.% divided by the concentration of component B in wt.% equals x:y.

Ratios mentioned herein are based on weight/weight, unless indicated otherwise. Similarly, all percentages are percentages by weight (w/w) unless otherwise indicated.

When multiple preferred ranges are described in the format "from x to y" for a specific feature, it should be understood that all ranges combining the different endpoints are also contemplated.

If, for a particular component, a range of 0% to y% or less than y% is recited, said ingredient may be absent.

The non-alcoholic draught beer in the beer container of the present method preferably has an alcohol content of less than 0.5% ABV, more preferably of less than 0.3% ABV and most preferably of less than 0.1% ABV.

The draught beer preferably comprises 7-100 g/L, more preferably 8-80 g/L, even more preferably 10-50 g/L of fermentable sugars selected from glucose, maltose, fructose, sucrose and combinations thereof.

The draught beer preferably comprises 2-25 mg/L, more preferably 2-20 mg/L and most preferably 5-15 mg/L of the one or more glycolipids.

The one or more glycolipids in the draught beer are preferably selected from the glycolipid acids according to formula I, lactones obtained by intramolecular esterification of glycolipid acids according to formula I, physiologically acceptable salts of the glycolipid acids according to formula I and combinations thereof.

According to a particularly preferred embodiment, the container comprising the non-alcoholic draught beer is adapted to be connected to a beer tap, more particularly the container is adapted for attaching a keg coupler. Examples of keg couplers that may suitably be attached to the container are A, D, G, S, M and U style keg couplers.

The container comprising the non-alcoholic draught beer preferably is made of metal and/or plastic. Examples of suitable metals include stainless steel or aluminum. Examples of suitable plastics include polyethylene terephthalate (PET).

The container holding the non-alcoholic draught beer can be a rigid container, such as a keg, or a collapsible container, such as bag-in-box or bag-in-bottle packaging.

In a preferred embodiment, the container comprises at least one valve, more preferably a self-closing valve.

In one embodiment of the present invention, the beer container is a beer keg for use in the catering industry, said beer keg having an internal volume of 10 to 1,200 L, more preferably of 15 to 800 L, most preferably of 18-600 L.

In another embodiment of the invention, the beer container is for home use, said beer container having an internal volume of 5-20 L, more preferably of 6-12 L. According to a particularly preferred embodiment, the beer container for home use comprises a rigid container and a collapsible bag holding the beer that is located within the rigid container.

R in formula I preferably is a carbohydrate moiety of formula II, 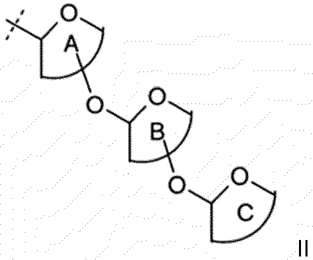 wherein the rings A, B and C are monosaccharide moieties each independently from the others with 5 or 6 ring members, wherein one or more of the hydroxyl groups may be acylated, preferably by a C₂-C₁₀ alkanoic acid.

The integer m in formula I preferably is 3 or 5.

The integer n in formula I preferably equals 3.

The integer p in formula I preferably is 12.

According to a particularly preferred embodiment, the glycolipid acids according to formula I are selected from:

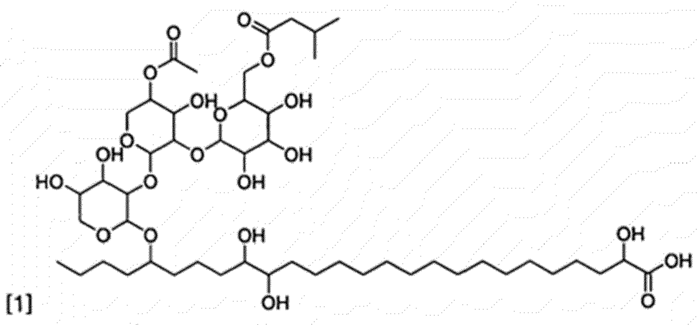

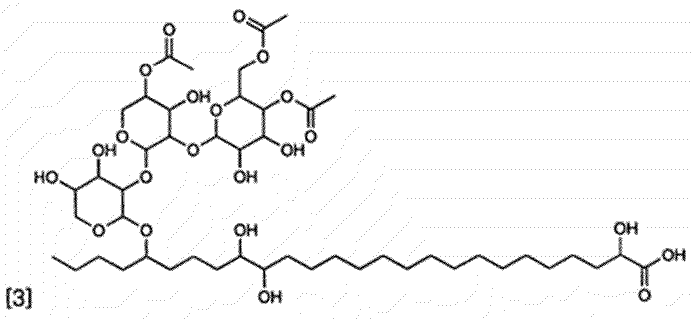

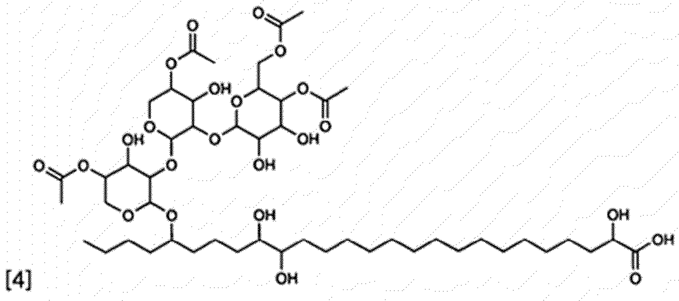

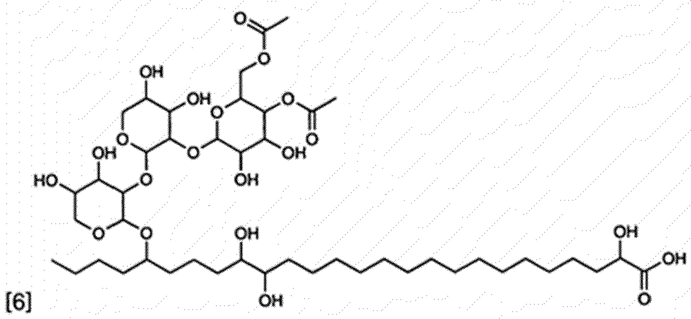

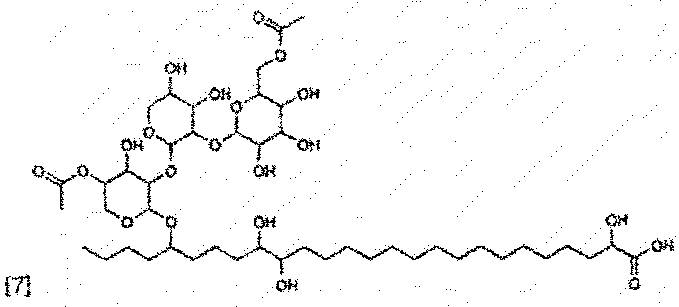

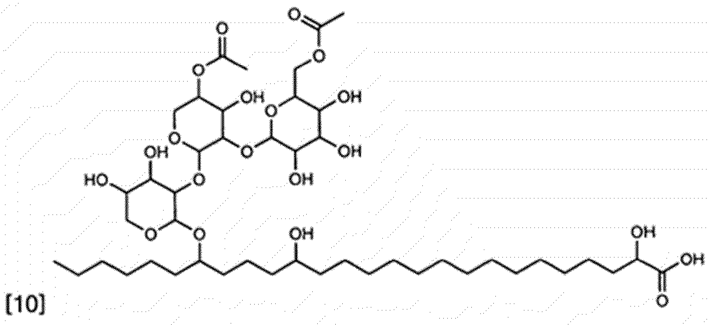

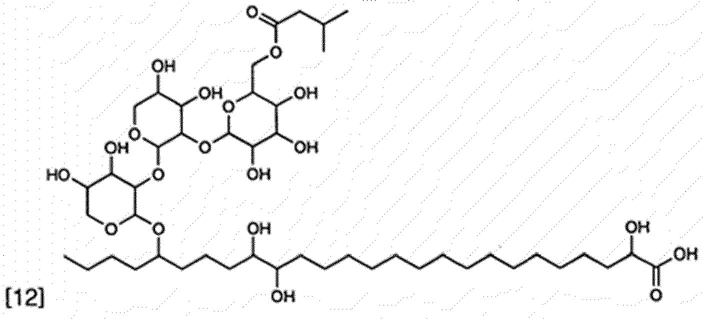

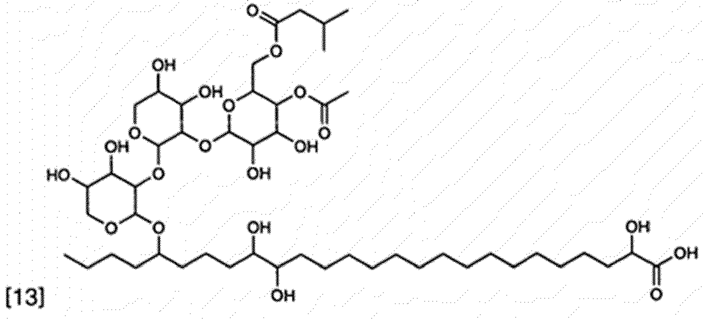

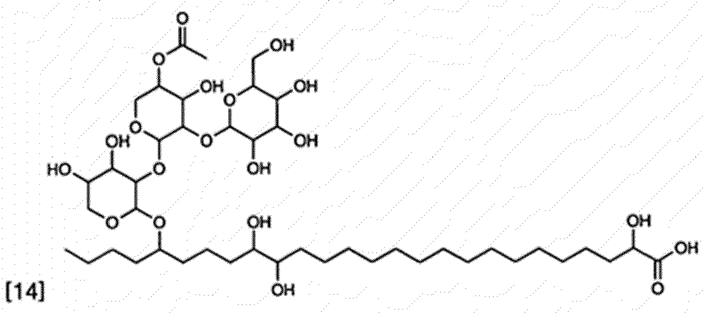

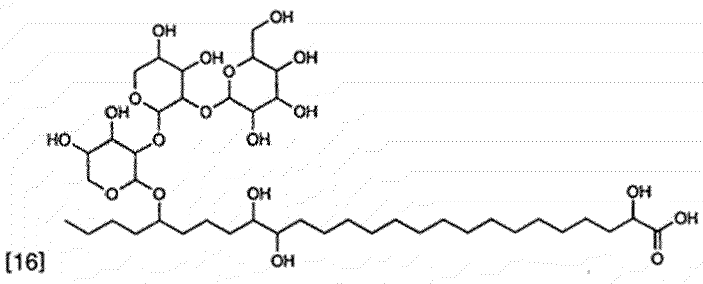

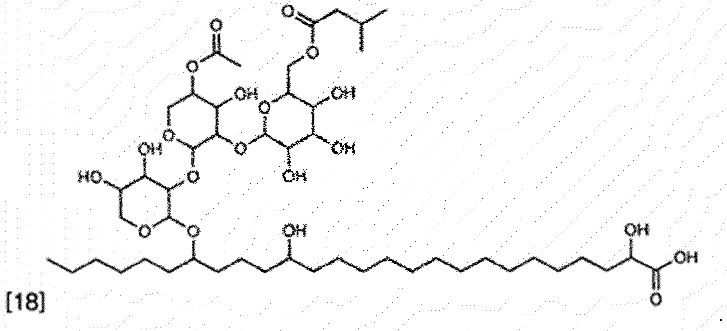

The draught beer preferably contains 0.3-20 mg/L, more preferably 0.5-15 mg/L, even more preferably 1-10 mg/L, yet more preferably 1.5-7 mg/L and most preferably 2-5 mg/L of the one or more reduced iso-alpha acids.

The one or more reduced iso-alpha acids in the non-alcoholic draught beer are preferably selected from tetrahydro-iso-alpha acids and hexahydro-iso-alpha acids. Most preferably, the reduced iso-alpha acids are tetrahydro-iso alpha acids.

In one embodiment of the present invention, besides the one or more reduced iso-alpha acids, the draught beer contains non-reduced iso-alpha acids. In accordance with this embodiment, non-reduced iso-alpha acids are present in the draught beer in a concentration of 2-40 mg/L, more preferably of 5-35 mg/L and most preferably of 15-30 mg/L. Reduced iso-alpha acids are preferably present in a concentration of 0.5-10 mg/L, more preferably 1-8 mg/L and most preferably 2-5 mg/L.

In one embodiment of the present invention, besides the reduced iso-alpha acids, the draught beer contains less than 1 mg/L non-reduced iso-alpha acids. In accordance with this embodiment, reduced iso-alpha acids are preferably present in a concentration of 2-50 mg/L, more preferably 3-40 mg/L and most preferably 4-20 mg/L.

In accordance with a further preferred embodiment, besides the one or more glycolipids and the one or more reduced iso-alpha acids, the non-alcoholic draught beer contains 5-100 mg/L of one or more anionic polysaccharides. More preferably contains 8-90 mg/L, even more preferably 10-80 mg/L and most preferably 20-70 mg/L of the one or more anionic polysaccharides.

The one or more anionic polysaccharides employed in accordance with the present invention preferably have a molecular weight of at least 2 kDa, more preferably of 3 to 2,000 kDa and most preferably of 5 to 1,000 kDa.

The one or more anionic polysaccharides are preferably selected from propylene glycol alginate, alginate, pectin, xanthan gum, carrageenan, dextran sulphate and hyaluronic acid. More preferably, the one or more polysaccharides are selected from propylene glycol alginate, alginate, pectin, xanthan gum and lambda-carrageenan. Most preferably, the anionic polysaccharide is propylene glycol alginate.

The draught beer preferably has a bitterness in the range of 10-30 IBU, more preferably in the range of 11-28 IBU, most preferably in the range of 12-25 IBU.

The draught beer of the present method preferably contains 0-10 cfu of yeast cells per 100 mL. More preferably, the draught beer contains 0-5 cfu of yeast cells per 100 mL.

The pH of the non-alcoholic draught beer is preferably in the range of 3.7 to 5.2, more preferably in the range of 4 to 5, most preferably in the range of 4.15 to 4.65.

The dispensing period employed I the present method preferably exceeds 24 hours. More preferably, the dispensing period is in the range of 2 to 21 days, most preferably in the range of 4-20 days. It will be understood that depending on e.g. weather conditions ambient temperatures can run up to 40°C or even higher.

During the dispensing period, the beer container is preferably kept at a temperature of at least 15 °C, more preferably at a temperature of at least 17 °C, most preferably at a temperature of 20-50 °C.

The invention is further illustrated by the following non-limiting examples.

### Examples

### Example 1

To an alcohol-free lager beer (containing 22 g/L fermentable sugars) was added 12 ppm antimicrobial glycolipids (Nagardo^{™}, Lanxess), with or without reduced iso-alpha acids (either Tetrahop Gold^{™} or Hexahop^{™}, both available from Barth Haas). The so-obtained beers were tested for foam stability using a NIBEM-T tester. The results are shown in Table 1.

**Table 1**

| **Sample no.** | **Nagardo (ppm)** | **Tetrahop Gold (ppm)** | **Hexahop (ppm)** | **Foam stability (sec)** |
|---|---|---|---|---|
| 1 | 0 | 0 | 0 | 277 |
| 2 | 12 | 0 | 0 | 175 |
| 3 | 12 | 3.8 | 0 | 233 |
| 4 | 12 | 4.9 | 0 | 237 |
| 5 | 12 | 0 | 2.9 | 203 |
| 6 | 12 | 0 | 3.8 | 227 |

### Example 2

To an alcohol-free draught beer (containing 22 g/L fermentable sugars) were added 12 ppm antimicrobial glycolipids (Nagardo^{™}, Lanxess) and 5.8 ppm reduced iso-alpha acids (Tetrahop Gold^{™}, Barth Haas) immediately prior to filling into 20 L kegs. The beer lines were flushed with yeast-infected non-alcoholic beer (650 cfu/mL) prior to connecting the beer lines to the keg. The CO₂ pressure was set to 1.2 bar and the kegs were left at room temperature (average 25.0°C). The initial alcohol concentration was 0.028 ABV and the initial yeast count was 0 cfu/100 ml.

After 15 days of storage yeast growth and ethanol formation inside the kegs were measured and the measurement results were averaged. The results are shown in Table 2.

**Table 2**

| **Addition** | **Ethanol (% ABV)** | **Yeast count (cfu / 100 mL)** |
|---|---|---|
| No addition (ref) | 0.042 | 300 |
| Nagardo + Tetrahop Gold | 0.028 | 0 |

### Example 3

To an alcohol-free lager beer (containing 22 g/L fermentable sugars) was added 12 ppm antimicrobial glycolipids (Nagardo^{™}, Lanxess), with or without reduced iso-alpha acids (either Tetrahop Gold^{™} or Hexahop^{™}, both available from Barth Haas). The so-obtained beers were tested for foam stability using a NIBEM-T tester. The results are shown in Table 3.

**Table 3**

| **Sample no.** | **Nagardo (ppm)** | **Tetrahop Gold (ppm)** | **Hexahop (ppm)** | **Foam stability (sec)** |
|---|---|---|---|---|
| 1 | 0 | 0 | 0 | 278 |
| 2 | 12 | 3.2 | 0 | 241 |
| 3 | 12 | 4.2 | 0 | 256 |
| 4 | 12 | 5.1 | 0 | 262 |
| 5 | 12 | 0 | 3.0 | 232 |
| 6 | 12 | 0 | 4.0 | 241 |
| 7 | 12 | 0 | 5.0 | 239 |

### Example 4

To an alcohol-free draught beer (containing 22 g/L fermentable sugars) were added 10 mg/L antimicrobial glycolipids (Nagardo^{™}, Lanxess) and 2.4 mg/L reduced iso-alpha acids (Tetrahop Gold^{™}, Barth Haas), with or without 50 mg/L propylene glycol alginate (PGA solution 2.7%, Murphy & Son Ltd.). Foam robustness of these beers was determined, as well as of a reference alcohol-free beer containing no added glycolipids, no added reduced iso-alpha acids and no added PGA.

Foam robustness of the beers was tested as follows:
- An oil-in-water emulsion was prepared by mixing 10 mL sunflower oil and 1.75 mL Tween80 in a glass beaker using a magnetic flea
- Next 10 mL of water is slowly added under constant stirring
- The emulsion so prepared is stored for 24 hours in a fridge
- Before use of the emulsion it is ascertained that no phase separation has occurred
- The emulsion is diluted by mixing 1 part by weight of the emulsion with 50 parts by weight of water
- After rinsing of the NIBEM measurement glass, first a small quantity (250-750 µL) of the diluted emulsion is added to the glass, followed by introduction of the beer sample.
- Next, NIBEM foam stability is measured

The results of the measurements are summarised in Table 4.

**Table 4**

| | **Foam stability (seconds)** | | |
|---|---|---|---|
| **Added amount of diluted emulsion (µL)** | **Reference beer** | **Beer containing added glycolipids** | **Beer containing added glycolipids + added PGA** |
| 0 | 258 | 232 | 239 |
| 250 | 234 | 170 | 215 |
| 500 | 203 | 161 | 188 |
| 750 | 191 | 156 | 172 |

### Comparative Example

Antimicrobial glycolipids (Nagardo, Lanxess) and/or a concentrated aqueous solution of alpha-acids (Alpha Extract 20%, Hopsteiner) were added in different concentration to an alcohol-free lager beer (containing 22 g/L fermentable sugars). The so-obtained beers were tested for foam stability using a NIBEM-T tester. The results are shown in Table 5.

**Table 5 (foam stability in seconds)**

| **Nagardo (ppm)** | **Alpha extract (ppm)** | | | | | | |
|---|---|---|---|---|---|---|---|
| | **0** | **5** | **7** | **10** | **12** | **15** | **20** |
| **0** | 253 | 284 | 287 | 289 | 283 | 282 | 243 |
| **2** | 238 | 243 | 227 | 226 | 224 | 225 | 221 |
| **4** | 225 | 212 | 192 | 197 | 207 | 210 | 210 |
| **6** | 208 | 185 | 173 | 181 | 181 | 185 | 216 |
| **8** | 200 | 171 | 159 | 161 | 160 | 165 | 179 |
| **9** | 191 | 154 | 154 | 150 | 149 | 148 | 161 |
| **10** | 139 | 152 | 145 | 140 | 140 | 153 | 157 |

## Claims

1. A method of dispensing non-alcoholic draught beer from a beer container comprising 4-10,000 L of the beer during a dispensing period until the container is empty, wherein the dispensing period exceeds 12 hours and wherein the beer container is kept at ambient temperature during the dispensing period, said non-alcoholic draught beer comprising:
• 5-150 g/L of fermentable sugars selected from glucose, maltose, fructose, sucrose and combinations thereof;
• 2-50 mg/L of one or more glycolipids selected from:
- glycolipid acids according to formula I, 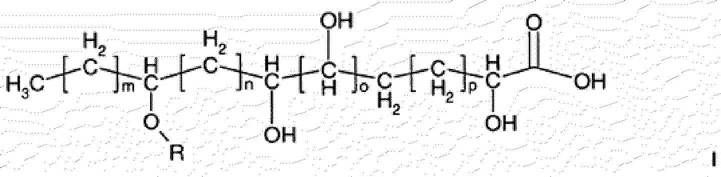 wherein:
- $3 \leq m \leq 5 ,$
- $2 \leq n \leq 5 ,$
- o = 0 or o = 1,
- $3 \leq p \leq 17 ,$
- $m + n + o + p \geq 14 ;$
- R is a carbohydrate moiety bound via one of its carbon atoms to the binding oxygen,
- lactones obtained by intramolecular esterification of glycolipid acids according to formula I,
- physiologically acceptable salts of the glycolipid acids according to formula I;
- esters of the glycolipid acids according to formula I; and
• 0.1-50 mg/L of one or more reduced iso-alpha acids selected from dihydro-iso-alpha acids, tetrahydro-iso-alpha acids and hexahydro-iso-alpha acids.

2. Method according to claim 1, wherein the non-alcoholic draught beer has an alcohol content of less than 0.5% ABV, preferably of less than 0.1% ABV.

3. Method according to claim 1 or 2, wherein the container is adapted to be connected to a beer tap.

4. Method according to any one of the preceding claims, wherein R in formula I is a carbohydrate moiety of formula II, 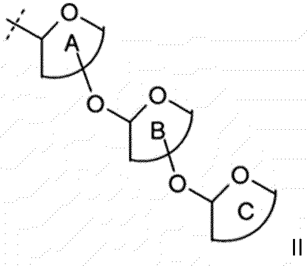 wherein the rings A, B and C are monosaccharide moieties each independently from the others with 5 or 6 ring members, wherein one or more of the hydroxyl groups may be acylated, preferably by a C₂-C₁₀ alkanoic acid.

5. Method according to any one of the preceding claims, wherein m is 3 or 5.

6. Method according to any one of the preceding claims, wherein n is 3.

7. Method according to any one of the preceding claims, wherein p is 12.

8. Method according to any one of the preceding claims, wherein the glycolipid acids according to formula I are selected from:

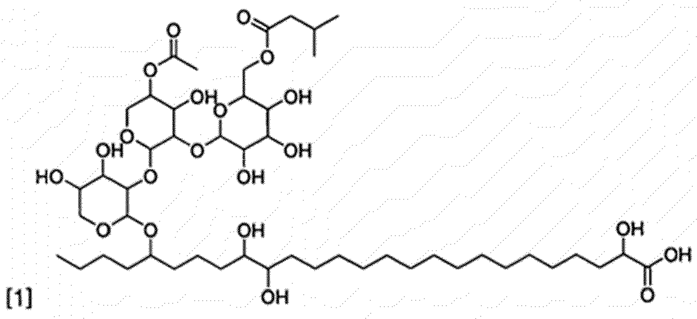

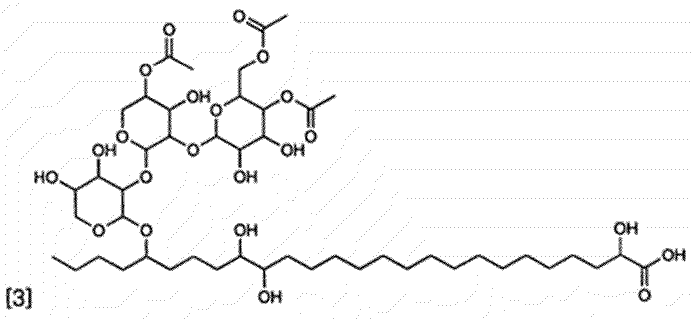

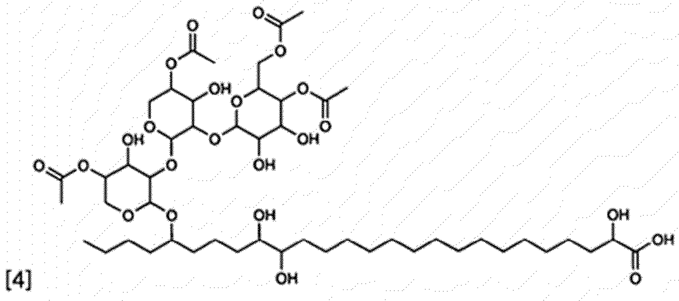

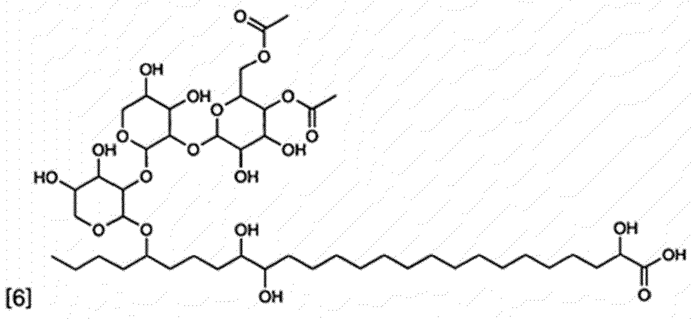

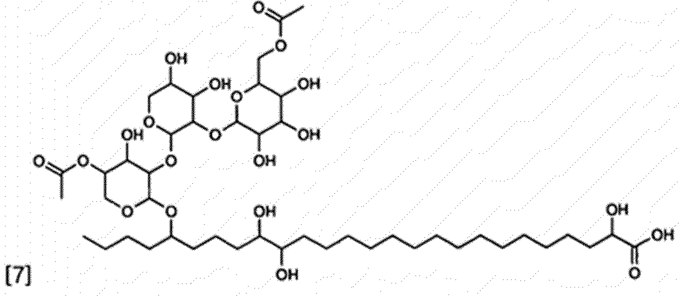

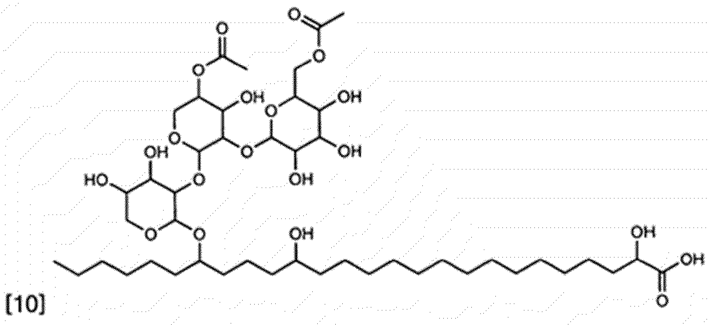

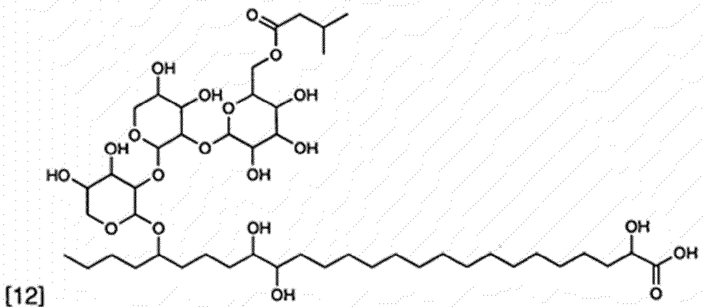

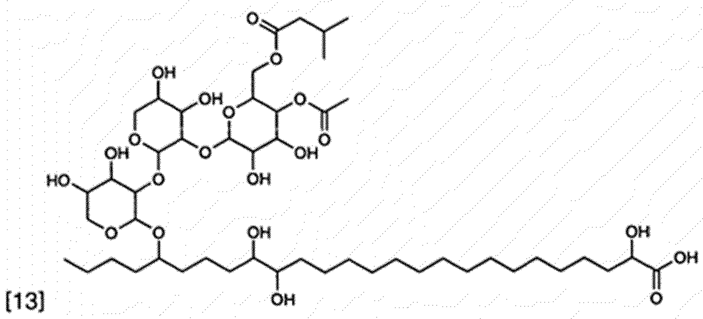

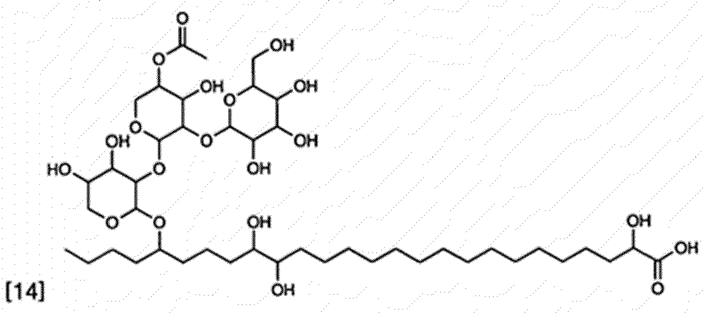

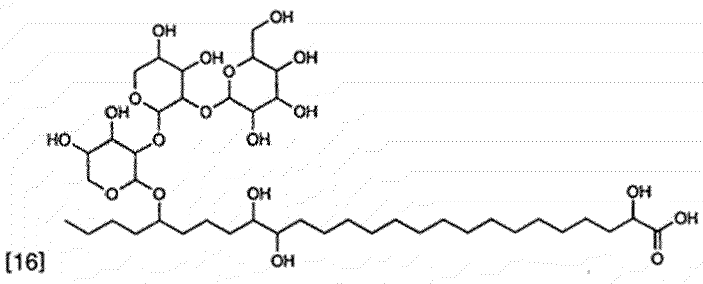

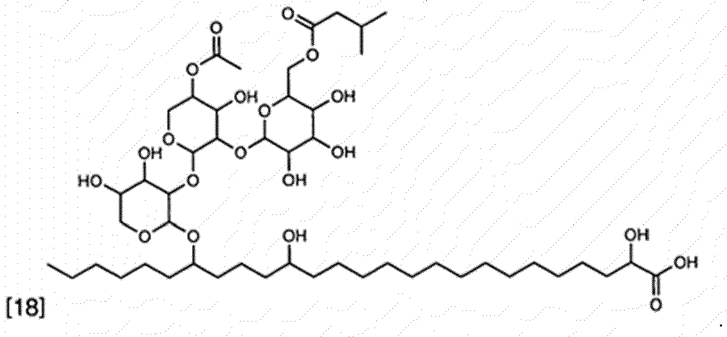

9. Method according to any one of the preceding claims, wherein the one or more reduced iso-alpha acids are selected from tetrahydro-iso-alpha acids and hexahydro-iso-alpha acids.

10. Method according to any one of the preceding claims, wherein the non-alcoholic draught beer comprises 0.5-25 mg/L, preferably 2-20 mg/L of the one or more glycolipids.

11. Method according to any one of the preceding claims, wherein the non-alcoholic draught beer comprises 0.5-20 mg/L, preferably 1-10 mg/L of the one or more reduced iso-alpha acids.

12. Method according to any one of the preceding claims, wherein the non-alcoholic draught beer comprises non-reduced iso-alpha acids in a concentration of 5-35 mg/L.

13. Method according to any one of the preceding claims, wherein the non-alcoholic draught beer contains 5-100 mg/L of one or more anionic polysaccharides.

14. Method according to any one of the preceding claims, wherein during the dispensing period the beer container is kept at a temperature of at least 15 °C.

15. Method according to any one of the preceding claims, wherein the dispensing period exceeds 24 hours.

## Patentansprüche

1. Verfahren zum Ausschenken von alkoholfreiem Fassbier aus einem Bierbehälter, der 4 bis 10.000 L des Biers umfasst, während eines Ausschenkzeitraums, bis der Behälter leer ist, wobei der Ausschenkzeitraum 12 Stunden überschreitet und wobei der Bierbehälter während des Ausschenkzeitraums bei Umgebungstemperatur gehalten wird, wobei das alkoholfreie Fassbier Folgendes umfasst:
• 5 bis 150 g/L vergärbare Zucker, ausgewählt aus Glucose, Maltose, Fructose, Saccharose und Kombinationen davon;
• 2 bis 50 mg/L eines oder mehrerer Glykolipide, ausgewählt aus:
- Glykolipidsäuren gemäß Formel I, 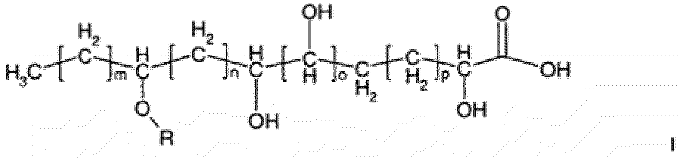 wobei:
- $3 \leq m \leq 5 ,$
- $2 \leq n \leq 5 ,$
- o = 0 oder o = 1,
- $3 \leq p \leq 17 ,$
- $m + n + o + p \geq 14 ;$
- R ein Kohlenhydratrest ist, der über eines seiner Kohlenstoffatome an den Bindungssauerstoff gebunden ist,
- Lactone, die durch intramolekulare Veresterung von Glykolipidsäuren gemäß Formel I erhalten werden,
- physiologisch unbedenkliche Salze der Glykolipidsäuren gemäß Formel I;
- Ester der Glykolipidsäuren gemäß Formel I; und
• 0,1 bis 50 mg/L einer oder mehrerer reduzierter Iso-Alpha-Säuren, ausgewählt aus Dihydro-Iso-Alpha-Säuren, Tetrahydro-Iso-Alpha-Säuren und Hexahydro-Iso-Alpha-Säuren.

2. Verfahren nach Anspruch 1, wobei das alkoholfreie Fassbier einen Alkoholgehalt von weniger als 0,5 Vol.-%, vorzugsweise von weniger als 0,1 Vol.-% aufweist.

3. Verfahren nach Anspruch 1 oder 2, wobei der Behälter dazu ausgelegt ist, mit einem Zapfhahn verbunden zu werden.

4. Verfahren nach einem der vorhergehenden Ansprüche, wobei R in Formel I ein Kohlenhydratrest der Formel II ist, 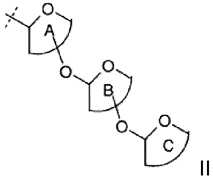 wobei die Ringe A, B und C Monosaccharidreste sind, die jeweils unabhängig voneinander 5 oder6 Ringglieder aufweisen, wobei eine oder mehrere der Hydroxylgruppen acyliert sein können, vorzugsweise durch eine C₂-C₁₀-Alkansäure.

5. Verfahren nach einem der vorhergehenden Ansprüche, wobei m 3 oder 5 ist.

6. Verfahren nach einem der vorhergehenden Ansprüche, wobei n 3 ist.

7. Verfahren nach einem der vorhergehenden Ansprüche, wobei p 12 ist.

8. Verfahren nach einem der vorhergehenden Ansprüche, wobei die Glykolipidsäuren gemäß Formel I ausgewählt sind aus:

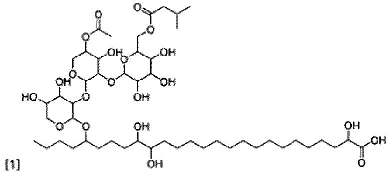

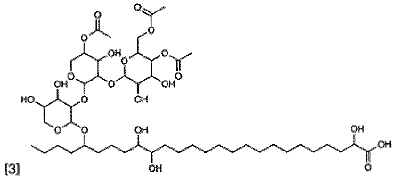

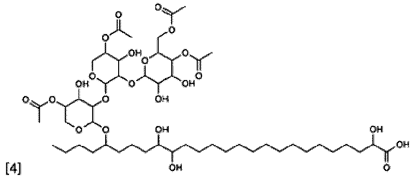

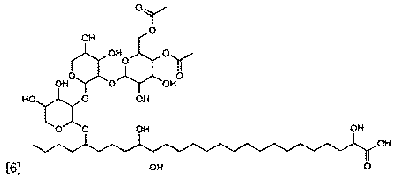

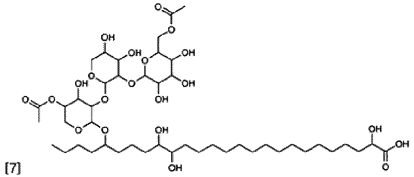

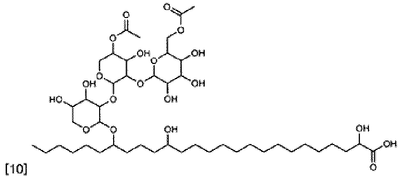

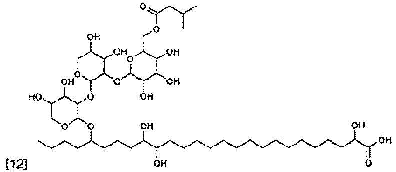

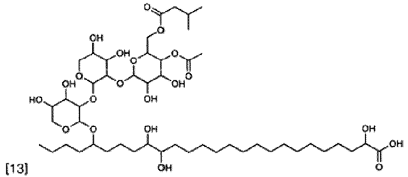

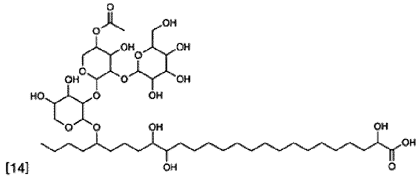

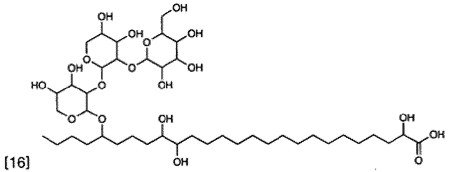

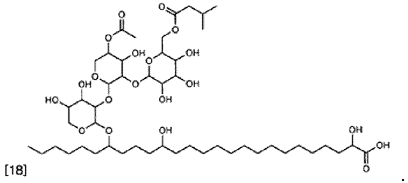

9. Verfahren nach einem der vorhergehenden Ansprüche, wobei die eine oder mehreren reduzierten Iso-Alpha-Säuren ausgewählt sind aus Tetrahydro-Iso-Alpha-Säuren und Hexahydro-Iso-Alpha-Säuren.

10. Verfahren nach einem der vorhergehenden Ansprüche, wobei das alkoholfreie Fassbier 0,5 bis 25 mg/L, vorzugsweise 2 bis 20 mg/L der einen oder mehreren Glykolipide umfasst.

11. Verfahren nach einem der vorhergehenden Ansprüche, wobei das alkoholfreie Fassbier 0,5 bis 20 mg/L, vorzugsweise 1 bis 10 mg/L der einen oder mehreren reduzierten Iso-Alpha-Säuren umfasst.

12. Verfahren nach einem der vorhergehenden Ansprüche, wobei das alkoholfreie Fassbier nicht reduzierte Iso-Alpha-Säuren in einer Konzentration von 5 bis 35 mg/L umfasst.

13. Verfahren nach einem der vorhergehenden Ansprüche, wobei das alkoholfreie Fassbier 5 bis 100 mg/L eines oder mehrerer anionischer Polysaccharide enthält.

14. Verfahren nach einem der vorhergehenden Ansprüche, wobei der Bierbehälter während des Ausschenkzeitraums auf einer Temperatur von mindestens 15 °C gehalten wird.

15. Verfahren nach einem der vorhergehenden Ansprüche, wobei der Ausschenkzeitraum 24 Stunden überschreitet.

## Revendications

1. Procédé de distribution de bière pression sans alcool à partir d'un récipient de bière comprenant 4 à 10 000 L de la bière pendant une période de distribution jusqu'à ce que le récipient soit vide, dans lequel la période de distribution dépasse 12 heures et dans lequel le récipient de bière est maintenu à température ambiante pendant la période de distribution, ladite bière pression sans alcool comprenant :
• 5 à 150 g/L de sucres fermentescibles choisis parmi le glucose, le maltose, le fructose, le saccharose et leurs combinaisons ;
• 2 à 50 mg/L d'un ou plusieurs glycolipides choisis parmi :
- des acides glycolipidiques selon la formule I, 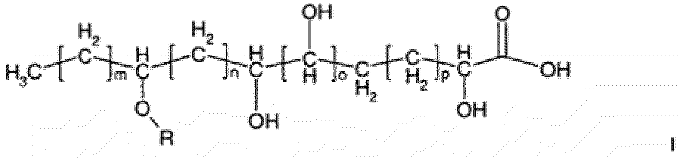 dans lequel :
- $3 \leq m \leq 5 ,$
- $2 \leq n \leq 5 ,$
- o = 0 ou o = 1,
- $3 \leq p \leq 17 ,$
- $m + n + o + p \geq 14 ;$
- R est un fragment glucidique lié via l'un de ses atomes de carbone à l'oxygène de liaison,
- des lactones obtenues par estérification intramoléculaire d'acides glycolipidiques selon la formule I,
- des sels physiologiquement acceptables des acides glycolipidiques selon la formule I ;
- des esters des acides glycolipidiques selon la formule I ; et
• 0,1 à 50 mg/L d'un ou plusieurs acides iso-alpha réduits choisis parmi les acides dihydro-iso-alpha, les acides tétrahydro-iso-alpha et les acides hexahydro-iso-alpha.

2. Procédé selon la revendication 1, dans lequel la bière pression sans alcool a une teneur en alcool inférieure à 0,5 % vol, de préférence inférieure à 0,1 % vol.

3. Procédé selon la revendication 1 ou 2, dans lequel le récipient est adapté pour être connecté à un robinet de bière.

4. Procédé selon l'une quelconque des revendications précédentes, dans lequel R dans la formule I est un fragment glucidique de formule II, 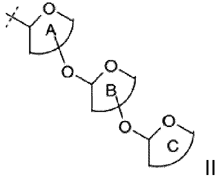 dans lequel les cycles A, B et C sont des fragments monosaccharidiques chacun indépendamment des autres avec 5 ou 6 chaînons, dans lequel un ou plusieurs des groupes hydroxyle peuvent être acylés, de préférence par un acide alcanoïque en C₂-C₁₀.

5. Procédé selon l'une quelconque des revendications précédentes, dans lequel m est 3 ou 5.

6. Procédé selon l'une quelconque des revendications précédentes, dans lequel n est 3.

7. Procédé selon l'une quelconque des revendications précédentes, dans lequel p est 12.

8. Procédé selon l'une quelconque des revendications précédentes, dans lequel les acides glycolipidiques selon la formule I sont choisis parmi :

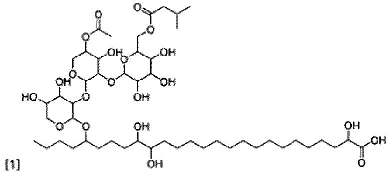

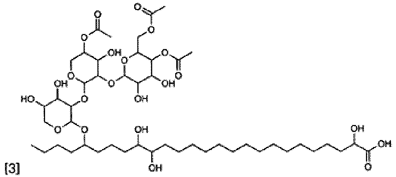

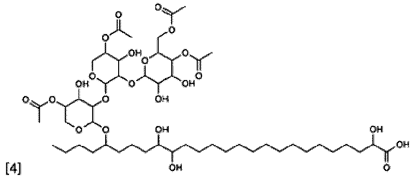

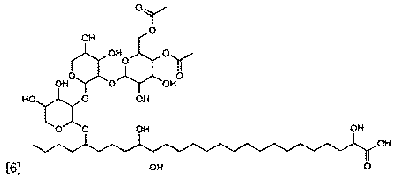

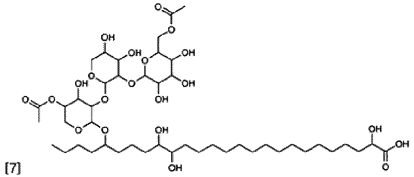

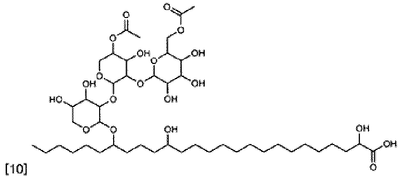

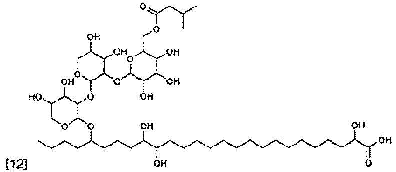

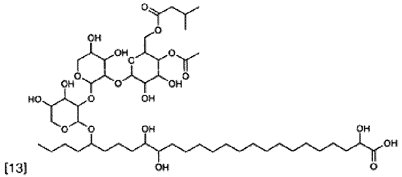

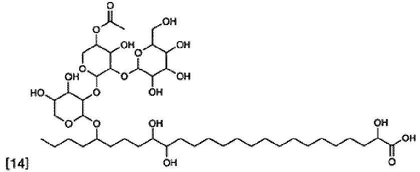

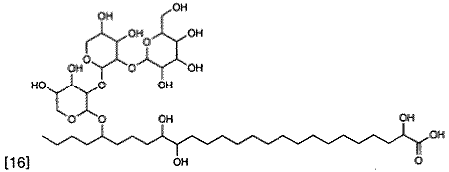

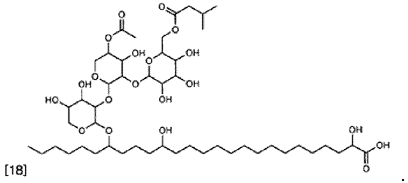

9. Procédé selon l'une quelconque des revendications précédentes, dans lequel le ou les acides iso-alpha réduits sont choisis parmi les acides tétrahydro-iso-alpha et les acides hexahydro-iso-alpha.

10. Procédé selon l'une quelconque des revendications précédentes, dans lequel la bière pression sans alcool comprend 0,5 à 25 mg/L, de préférence 2 à 20 mg/L du ou des glycolipides.

11. Procédé selon l'une quelconque des revendications précédentes, dans lequel la bière pression sans alcool comprend 0,5 à 20 mg/L, de préférence 1 à 10 mg/L du ou des acides iso-alpha réduits.

12. Procédé selon l'une quelconque des revendications précédentes, dans lequel la bière pression sans alcool comprend des acides iso-alpha non réduits en une concentration de 5 à 35 mg/L.

13. Procédé selon l'une quelconque des revendications précédentes, dans lequel la bière pression sans alcool contient 5 à 100 mg/L d'un ou plusieurs polysaccharides anioniques.

14. Procédé selon l'une quelconque des revendications précédentes, dans lequel pendant la période de distribution le récipient de bière est maintenu à une température d'au moins 15 °C.

15. Procédé selon l'une quelconque des revendications précédentes, dans lequel la période de distribution dépasse 24 heures.
